# EUROPÄISCHE PATENTSCHRIFT

(11) **EP 4 124 446 B1**
(45) Veröffentlichungstag und Bekanntmachung des Hinweises auf die Patenterteilung: **09.07.2025**
(21) Anmeldenummer: 22185430.0
(22) Anmeldetag: 18.07.2022
(51) Int. Cl.: B29D 30/00, B29D 30/72, B29C 48/00, B29C 37/00, B29L 30/00

(54) **VERFAHREN ZUR NACHVERFOLGUNG VON PROZESSPARAMETERN BEI DER HERSTELLUNG VON KAUTSCHUKPRODUKTEN**
METHOD FOR TRACKING PROCESS PARAMETERS IN THE PRODUCTION OF RUBBER PRODUCTS
PROCÉDÉ DE SUIVI DES PARAMÈTRES DE PROCESSUS DANS LA FABRICATION DE PRODUITS EN CAOUTCHOUC

(30) Priorität: 30.07.2021 DE 102021208265
(43) Veröffentlichungstag der Anmeldung: 01.02.2023
(73) Patentinhaber: Continental Reifen Deutschland GmbH, 30175 Hannover (DE)
(72) Erfinder: Chatziplaton, Charalampos, 30165 Hannover (DE); Rohleder, Martin, 30165 Hannover (DE); Quick, Nicolas, 30165 Hannover (DE); Heidenreich, Maurice, 30165 Hannover (DE); Pfaff, Florian, 30165 Hannover (DE)
(74) Vertreter: Continental Corporation

(56) Entgegenhaltungen:
- WO-A1-2013/039505
- WO-A1-2018/065135
- WO-A1-2018/217082
- DE-A1- 102013 223 567
- JP-A- 2002 036 692
- JP-A- S63 188 034
- US-A- 3 631 716

## Beschreibung

Die Erfindung betrifft ein Verfahren zur Nachverfolgung von Prozessparametern bei der Herstellung von Kautschukprodukten und eine Extrusionslinie zur Durchführung des Verfahrens. Offenbart werden zudem ein unvulkanisiertes Kautschukprodukt sowie ein hieraus herstellbares vulkanisiertes Kautschukprodukt.

Der Gegenstand der Erfindung ist in den beigefügten Ansprüchen definiert.

In vielen Bereichen der Technik ist es von großer Bedeutung, während der Herstellung von Produkten die Prozessparameter bzw. Informationen zu den Ausgangsmaterialien sorgsam zu dokumentieren, um eine hinreichende Qualitätskontrolle zu ermöglichen und/oder regulatorische Auflagen zu erfüllen. Diese Notwendigkeit besteht insbesondere auch im Bereich der Fertigung von Fahrzeugreifen, beispielsweise Fahrzeugluftreifen. Moderne Fahrzeugluftreifen sind Hochleistungsprodukte, bei denen eine sorgfältige Qualitätskontrolle notwendig ist. Wegen der hohen sicherheitstechnischen Relevanz ist es zudem notwendig, im Falle eines Defekts an einem Produkt eine effiziente Ursachenforschung betreiben zu können und gleichzeitig andere Produkte, die potentiell den gleichen Sicherheitsmangel aufweisen könnten, zuverlässig vom Markt nehmen zu Ein Verfahren und System zum Markieren von Chargen aus weichen Elastomeren für die Reifenherstellung ist in der Patentanmeldeschrift WO 2018 217082 A offenbart.

Im Bereich der Reifenfertigung wird es jedoch regelmäßig als nachteilig empfunden, dass die Nachverfolgung von Prozessinformationen in den in der Reifenindustrie eingesetzten Extrusionsprozessen auch und gerade wegen der komplexen Nachbehandlung nach dem Austritt aus dem Extruder häufig nur schwer möglich ist. Im Stand der Technik kann zwischen dem Ausformen der heißen Gummimasse am Extruderkopf und dem Verpackungsprozess am Ende der Extrusionslinie zumeist keine direkte, ausreichend zuverlässige Korrelation zwischen dem erhaltenen Produkt und den relevanten Prozessparametern des Extruders hergestellt werden.

Bis zum jetzigen Zeitpunkt ist der Fachmann bei der Fertigung von Gummiprodukten für Fahrzeugluftreifen, insbesondere bei der Ausformung von unvulkanisierten Laufstreifen, häufig darauf angewiesen, ausgehend von seiner Erfahrung grobe Abschätzungen zu machen, um für die ausgeformten Produkte zumindest ein Mindestmaß an Dokumentation zu ermöglichen.

Dies führt potentiell dazu, dass extrudierte Produkte, beispielsweise unvulkanisierte Laufstreifen bzw. die hieraus später hergestellten vulkanisierten Produkte, nicht oder zumindest nicht ausreichend zu der exakten Extrusionszeit zurückverfolgt werden können und dass die zugehörigen Prozessinformationen, beispielsweise bezüglich der verwendeten Extrusionsparametern, insbesondere der Massentemperatur und des Drucks, oder der Zusammensetzung der eingesetzten Verbindungen, diesen Produkten anschließend häufig nicht zweifelsfrei zugeordnet werden können.

Die vorstehend beschriebene Problematik wird, insbesondere im Bereich der Fertigung von Fahrzeugluftreifen, dadurch erschwert, dass die sogenannten grünen Produkte, d. h. die unvulkanisierten Kautschukprodukte, welche am Ende einer typischen Extrusionslinie erhalten werden, anschließend eine spezifische chemische Vernetzungsreaktion durchlaufen sollen, um schlussendlich mit anderen Komponenten verbunden und in einem Hochleistungsprodukt, d. h. einem Fahrzeugluftreifen, eingesetzt zu werden. Dies erschwert die Kennzeichnung entsprechender unvulkanisierter Kautschukprodukte auch am Ende der Extrusionslinie, da beispielsweise die Applikation mit kennzeichnender Farbe oder mit Aufklebern auf dem unvulkanisierten Kautschukprodukt problematisch ist. Je nach Klebstoff kann hierdurch potenziell die Vulkanisation und/oder eine spätere Verbindung mit anderen Reifenkomponenten lokal beeinträchtigt werden.

Eine entsprechende Kennzeichnung auf Flächen, die im späteren Fahrzeugreifen sichtbar sind, kann zudem zu unerwünschten Verfärbungen im Endprodukt führen, die, wenn auch nicht sicherheitstechnisch relevant, zu einer geringeren Akzeptanz des Produkts beim Endkunden führen könnten. Ebenso spricht bei den meisten unvulkanisierten Kautschukprodukten vieles gegen eine mechanische Kennzeichnung mit herkömmlichen Verfahren, da die so erzeugten makroskopischen Unebenheiten je nach dem Ort der Aufbringung bei der späteren Verarbeitung die Festigkeit des Verbundes mit anderen Reifenkomponenten reduzieren könnten, oder als ungewollte optische Defektstellen auf der Außenseite des Fahrzeugluftreifens verbleiben könnten.

Im Lichte der vorstehend beschriebenen Problematik erfolgt die Nachverfolgung von Prozessinformationen bei der Herstellung von Komponenten für Fahrzeugreifen in der Praxis häufig noch über rudimentäre, papierbasierte Systeme, sodass einzelnen unvernetzten Kautschukprodukten und dem zum Transport verwendeten Transportvorrichtungen zumindest grobe Prozessinformationen in Form eines beschriebenen Zettels beigefügt werden können.

Die primäre Aufgabe der vorstehenden Erfindung war es vor diesem Hintergrund, ein Verfahren zur Nachverfolgung von Prozessparametern bei der Herstellung von Kautschukprodukten anzugeben, welches die vorstehend beschriebenen Nachteile des Standes der Technik behebt oder zumindest verringert.

Hierbei war es eine Aufgabe, dass das anzugebende Verfahren zur Nachverfolgung von Prozessparametern bei der Herstellung von Kautschukprodukten so ausführbar sein sollte, dass die Prozessparameter der Herstellung, insbesondere des Extrusionsprozesses, sehr präzise mit den jeweiligen Teilen des unvulkanisierten Kautschukprodukt korreliert werden können.

Zudem war es eine Aufgabe, dass das anzugebende Verfahren zur Nachverfolgung von Prozessparametern bei der Herstellung von Kautschukprodukten nach der Vulkanisation der unvulkanisierten Kautschukprodukte keine bzw. im Wesentlichen keine Spuren, zumindest keine mit dem bloßen Auge sichtbaren Spuren, hinterlässt.

Es war eine Aufgabe der vorliegenden Erfindung, dass das anzugebende Verfahren zur Nachverfolgung von Prozessparametern bei der Herstellung von Kautschukprodukten den Bedarf nach einem papierbasierten Kennzeichnungssystem reduziert und über große Teile des Fertigungsprozesses von Fahrzeugluftreifen eine zuverlässige Identifikation des unvulkanisierten Kautschukprodukts und eine Zuordnung mit den bei der Herstellung verwendeten Prozessparametern ermöglichen sollte.

Hierbei war es wünschenswert, dass die Nachverfolgung von Prozessparametern auch nach langer Lagerung der unvulkanisierten Kautschukprodukte möglich sein sollte.

Zudem war es eine Vorgabe, dass die anzugebende Lösung keine chemischen Inkompatibilitäten mit dem unvulkanisierten Kautschukprodukt erzeugen sollte, insbesondere nicht beim anschließenden Vulkanisationsprozess.

Hierbei war es wünschenswert, dass das anzugebende Verfahren zur Nachverfolgung von Prozessparametern bei der Herstellung von Kautschukprodukten ohne den Einsatz von Farbe oder potenziell gesundheitsschädlichen Substanzen auskommen sollte.

Darüber hinaus sollte das anzugebende Verfahren zur Nachverfolgung von Prozessparametern bei der Herstellung von Kautschukprodukten idealerweise so ausgestaltet werden, dass es mit einem hohen Durchsatz betrieben werden kann, um es besonders zeit- und kosteneffizient betreiben zu können.

Vorteilhafterweise sollte das anzugebende Verfahren zur Nachverfolgung von Prozessparametern bei der Herstellung von Kautschukprodukten besonders leicht in die übrigen Fertigungsschritte bei der Fertigung von Fahrzeugluftreifen integrierbar sein.

Hierbei war es wünschenswert, dass das anzugebende Verfahren besonders betriebssicher durchführbar sein sollte, wobei es eine ergänzende Vorgabe war, dass die Umweltbelastung mit Emissionen oder Partikelstäuben minimiert wird.

Zudem war es eine Aufgabe, ein unvulkanisiertes Kautschukprodukt anzugeben, welches Informationen über die bei seiner Herstellung verwendeten Prozessparameter nachverfolgbar macht, welches jedoch im späteren vulkanisierten Produkt weder Einschränkungen beim Verbund mit anderen

Kautschukkomponenten noch sichtbare Defekte auf der Oberfläche aufweist.

Ausgehend hiervon war es eine ergänzende Aufgabe, ein vulkanisiertes Kautschukprodukt anzugeben, welches aus dem unvulkanisierten Kautschukprodukt herstellbar ist und keine bzw. im Wesentlichen keine mit dem bloßen Auge sichtbaren Kennzeichnungen mehr umfasst, die auf die zuvor enthaltene Nachverfolgung der Informationen gerichtet waren.

Im Lichte der vorstehenden Ausführungen war es eine ergänzende Aufgabe der vorliegenden Erfindung, eine Vorrichtung zum Herstellen entsprechender unvulkanisierter Kautschukprodukte anzugeben, mit der insbesondere das anzugebende Verfahren zur Nachverfolgung von Prozessparametern bei der Herstellung von Kautschukprodukten besonders effizient durchgeführt werden kann.

Die Erfinder der vorliegenden Erfindung haben nunmehr erkannt, dass sich die vorstehend beschriebenen Aufgaben überraschenderweise lösen lassen, wenn das grüne Kautschukprodukt, d. h. das unvulkanisierte Kautschukprodukt in einer spezifischen Form markiert wird, wie es in den Ansprüchen definiert ist.

Hierzu erfolgt eine Kennzeichnung der Oberfläche des unvulkanisierten Kautschukprodukts, und zwar bevorzugt noch im warmen Zustand. Die Kennzeichnung, die Informationen über ein oder mehrere Prozessparameter der Herstellung umfasst und/oder über ein System zur Datenverarbeitung mit diesen Informationen verknüpft ist, kann dabei zielführenderweise als maschinenlesbare Markierung, d.h. mit einem maschinenlesbaren Code, ausgeführt werden.

Die Erfinder der vorliegenden Erfindung haben erkannt, dass das Aufbringen dieser Kennzeichnung durch das Erzeugen von Vertiefungen auf der Oberfläche erfolgen muss. Zur Lösung der vorstehend beschriebenen Aufgaben ist es dabei jedoch essenziell, dass die erzeugten Vertiefungen eine maximale Tiefe aufweisen.

Mit entsprechenden Kennzeichnungen ist es vorteilhafterweise möglich, unvulkanisierte Kautschukprodukte zu erhalten, welche nach dem Vulkanisieren auf ihrer Oberfläche keine bzw. im Wesentlichen keine mit bloßem Auge sichtbaren Spuren der zuvor aufgebrachten Kennzeichnung mehr aufweisen. Somit ist es möglich, eine effiziente Nachverfolgung von Prozessparametern bei der Herstellung von Kautschukprodukten zu ermöglichen, ohne die optische Qualität und die Materialeigenschaften des resultierenden vulkanisierten Kautschukprodukts nachteilig zu beeinflussen.

Die vorstehend genannten Aufgaben werden entsprechend durch Verfahren zur Nachverfolgung von Prozessparametern bei der Herstellung von Kautschukprodukten und entsprechende Vorrichtungen gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Gegenstände, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter unvulkanisierter Kautschukprodukte und der hieraus herstellbaren vulkanisierten Kautschukprodukte sowie bevorzugter erfindungsgemäßer Vorrichtungen ergeben sich auch aus den Merkmalen bevorzugter Verfahren.

Die Erfindung betrifft ein Verfahren zur Nachverfolgung von Prozessparametern bei der Herstellung von Kautschukprodukten, insbesondere von unvulkanisierten Laufstreifen für Fahrzeugluftreifen, umfassend die Schritte:
a) Herstellen eines unvulkanisierten Kautschukprodukts, umfassend eine vernetzbare Kautschukmischung, und
b) Aufbringen einer Kennzeichnung auf eine Oberfläche des unvulkanisierten Kautschukprodukts, wobei die Kennzeichnung Informationen über einen oder mehrere Prozessparameter der Herstellung umfasst und/oder über ein System zur Datenverarbeitung mit Informationen über einen oder mehrere Prozessparameter der Herstellung verknüpft ist,
wobei das Aufbringen der Kennzeichnung durch das Erzeugen von Vertiefungen auf der Oberfläche mit einem materialabtragenden Verfahren und/oder einem eindrückenden Verfahren erfolgt, wobei die erzeugten Vertiefungen eine Tiefe von 100 µm oder weniger aufweisen.

Das erfindungsgemäße Verfahren dient zur Nachverfolgung von Prozessparametern bei der Herstellung von Kautschukprodukten und ist insbesondere für den Einsatz in der Fertigung von unvulkanisierten Laufstreifen und anderen Komponenten von Fahrzeugluftreifen geeignet.

In Schritt a) des erfindungsgemäßen Verfahrens wird ein unvulkanisiertes Kautschukprodukt hergestellt, welches eine vernetzbare Kautschukmischung umfasst. Das erhaltene unvulkanisierte Kautschukprodukt wird auch als grünes Kautschukprodukt bezeichnet.

Auf der Oberfläche dieses unvulkanisierten Kautschukprodukts wird nunmehr eine Kennzeichnung aufgebracht. Diese Kennzeichnung kann beispielsweise unmittelbar eine Information über ein oder mehrere Prozessparameter der Herstellung umfassen. Hierbei kann es sich beispielsweise um den Herstellungszeitpunkt handeln, der durch die Uhrzeit dargestellt wird.

In besonders bevorzugten Ausführungsformen ist die aufgebrachte Kennzeichnung jedoch mit einem System zur Datenverarbeitung, beispielsweise einem Computer, mit Informationen über einen oder mehrere Prozessparameter der Herstellung verknüpfbar. In diesem Fall enthält die Kennzeichnung zweckmäßigerweise eine Verbindungsinformation, beispielsweise in Form eines QR-Codes, die ein System zur Datenverarbeitung beim Auflesen dazu veranlasst, einen bestimmten auf einer Speichereinheit gespeicherten Datensatz aufzurufen, welcher einen oder mehrere Prozessparameter der Herstellung umfasst.

Erfindungsgemäß erfolgt das Aufbringen der Kennzeichnung durch das Erzeugen von Vertiefungen in der Oberfläche mit einem spezifischen Verfahren. Hierfür wurden materialabtragende Verfahren, beispielsweise das Fräsen und/oder eindrückende Verfahren, beispielsweise mit einem prägenden Stempel, als grundsätzlich geeignet identifiziert, wobei materialabtragende Verfahren bevorzugt sind. Nach Einschätzung der Erfinder ist es essenziell, dass die erzeugten Vertiefungen eine maximale Tiefe von 100 µm aufweisen. Ausgehend von eigenen Versuchen der Erfinder werden oberhalb dieser Maximaltiefe die Verarbeitungseigenschaften im markierten Bereich potentiell nachteilig beeinflusst und nach dem Vulkanisieren können tiefere Vertiefungen in vielen Fällen noch mit dem bloßen Auge wahrgenommen werden. Bevorzugt ist hierbei ein erfindungsgemäßes Verfahren, wobei sämtliche der erzeugten Vertiefungen eine Tiefe von 100 µm oder weniger aufweisen.

In eigenen Versuchen der Erfinder hat es sich aber als besonders vorteilhaft erwiesen, die Vertiefungen mit einer noch geringeren Tiefe auszuführen. Dadurch war es möglich, den Einfluss der Kennzeichnung auf die Oberflächeneigenschaften der gekennzeichneten Fläche zu verringern und insbesondere ein im Wesentlichen vollständiges Verschwinden der Kennzeichnung nach dem Schritt des Vulkanisierens zu erreichen. Bevorzugt ist nämlich ein erfindungsgemäßes Verfahren, wobei die erzeugten Vertiefungen, bevorzugt sämtliche der erzeugten Vertiefungen, eine Tiefe von 70 µm oder weniger, bevorzugt 50 µm oder weniger, besonders bevorzugt 30 µm oder weniger, aufweisen.

Grundsätzlich erfordert das erfindungsgemäße Verfahren vorteilhafterweise keine Mindesttiefe der erzeugten Vertiefungen. Tatsächlich hängt es in der Praxis meist lediglich von der Genauigkeit der Sensoren ab, die später zum Auslesen der Kennzeichnung verwendet werden sollen. Wenn besonders hochwertige Sensoren mit einer hohen Erkennungsgenauigkeit verwendet werden, sind somit auch sehr kleine Vertiefungen einsetzbar. Mit Blick auf eine effiziente Verfahrensführung hat es sich jedoch als besonders vorteilhaft erwiesen, eine gewisse Mindesttiefe vorzusehen, sodass die Kennzeichnung auch mit vergleichsbaren kostengünstigen Sensoren einfach auszulesen ist, da ein ausreichend großer Kontrast besteht. Bevorzugt ist daher ein erfindungsgemäßes Verfahren, wobei die erzeugten Vertiefungen, bevorzugt sämtliche der erzeugten Vertiefungen, eine Tiefe von zumindest 5 µm, bevorzugt zumindest 10 µm, besonders bevorzugt zumindest 20 µm, aufweisen.

Im Lichte der vorstehenden Ausführungen schlagen die Erfinder zudem vor, dass die erzeugten Vertiefungen auch nicht zu breit gewählt werden sollten. Obwohl dies mit Blick auf die spätere Erkennbarkeit der Markierung nach Einschätzung der Erfinder eher ein sekundärer Aspekt ist, kann bei besonders breiten Vertiefungen, insbesondere wenn diese am oberen Ende der maximalen Tiefe liegen und der Vulkanisationsprozess ungünstig ausgeführt wird, eine ungewollte Kennzeichnung auf der Oberfläche verbleiben. Bevorzugt ist somit ein erfindungsgemäßes Verfahren, wobei die erzeugten Vertiefungen, bevorzugt sämtliche der erzeugten Vertiefungen, an der Öffnung eine Breite von 1000 µm oder weniger, bevorzugt 800 µm oder weniger, besonders bevorzugt 600 µm oder weniger, aufweisen.

Von den vorstehend definierten Möglichkeiten des Informationsgehalts der Kennzeichnung ist es explizit bevorzugt, wenn die Kennzeichnung so ausgeführt wird, dass sie über ein System zur Datenverarbeitung mit Informationen mit einem oder mehreren Prozessparameter verknüpft ist. Eine entsprechende Ausführung ist besonders vorteilhaft, weil die Prozessparameter auf diese Weise mittels des Systems zur Datenverarbeitung besonders effizient prozessiert, angepasst und weiterverarbeitet werden können, sodass das gekennzeichnete unvulkanisierte Kautschukprodukt im Laufe des Herstellungsverfahrens auch mit solchen Daten korreliert werden kann, die von den Informationen über den zumindest einen Prozessparameter abgeleitet sind. Bevorzugt ist entsprechend ein erfindungsgemäßes Verfahren, wobei die Kennzeichnung über ein Datenverarbeitungssystem mit Informationen über einen oder mehrere Prozessparameter der Herstellung verknüpft ist.

Ein entsprechendes System lässt sich vorteilhafterweise durch einen QR-Code oder einen Data-Matrix-Code realisieren, welcher eine Verbindungsinformation umfasst, die eine auslesende Datenverarbeitungsvorrichtung dazu veranlasst, eine entsprechende Verbindung aufzubauen, beispielsweise zu einem bestimmten Speichersegment auf einer Speichereinheit. Bevorzugt ist daher ein erfindungsgemäßes Verfahren, wobei die Kennzeichnung eine maschinenlesbare Kennzeichnung ist. Bevorzugt ist insbesondere ein erfindungsgemäßes Verfahren, wobei die Kennzeichnung einen QR-Code, einen Bar-Code oder einen DataMatrix-Code, bevorzugt einen DataMatrix-Code, umfasst.

Grundsätzlich lassen sich als Informationen über den zumindest einen Prozessparameter alle möglichen Informationen speichern. Als besonders vorteilhaft haben sich insbesondere im Bereich der Fahrzeugreifenherstellung jedoch die Informationen über spezifische Prozessparameter erwiesen, die erfahrungsgemäß nachgehalten werden sollten. Bevorzugt ist somit ein erfindungsgemäßes Verfahren, wobei die Informationen über einen oder mehrere Prozessparameter Informationen über den Herstellungszeitpunkt, die Herstellungstemperatur, den Druck, die Profilgeometrie, das Gewicht, die Betriebsparameter des Extruders und/oder die Zusammensetzung der vernetzbaren Kautschukmischung enthalten.

Auch wenn in dem erfindungsgemäßen Verfahren der negative Einfluss der Oberflächenbehandlung auf die spätere Verarbeitbarkeit des unvulkanisierten Kautschukprodukts vorteilhafterweise minimiert wird, hat es sich als besonders vorteilhaft erwiesen, die Kennzeichnung nicht auf einer Fläche anzubringen, die im späteren Verlauf mit anderen Teilen des Fahrzeugreifens verbunden werden soll. Hierdurch wird nicht nur eine hohe Qualität der Verbindung sichergestellt, sondern der Vorteil des erfindungsgemäßen Verfahrens, dass die Kennzeichnung nach der Vulkanisation nicht mehr zu erkennen ist, wird besonders stark ausgenutzt. Bevorzugt ist deshalb ein erfindungsgemäßes Verfahren, wobei die Kennzeichnung auf eine Oberfläche des unvulkanisierten Kautschukprodukts aufgebracht wird, die im Einsatz des vulkanisierten Kautschukprodukts sichtbar ist.

Wie vorstehend erläutert, kommen grundsätzlich eine große Palette an Verfahren in Frage, mit denen die notwendigen Vertiefungen der Kennzeichnung erzeugt werden können. In eigenen Versuchen haben die Erfinder jedoch erkannt, dass der Einsatz von Lasern besonders bevorzugt ist, da sich mit diesen besonders feine Strukturen in einer besonders kontrollierten Art und Weise erzeugen lassen. Hierbei ist es den Erfindern gelungen, Laser und geeignete Wellenlängen zu identifizieren, die eine ausgezeichnete Wechselwirkung mit dem zu bearbeitenden Material aufweisen und mit denen die Kennzeichnung bei dem erfindungsgemäßen Verfahren entsprechend besonders gut und genau aufgebracht werden kann. Bevorzugt ist somit ein erfindungsgemäßes Verfahren, wobei das Aufbringen der Kennzeichnung durch das Erzeugen von Vertiefungen auf der Oberfläche mit einem Laser erfolgt, wobei der Laser vorzugsweise ein CO₂-Laser oder ein Faserlaser ist. Bevorzugt ist dabei ein erfindungsgemäßes Verfahren, wobei der Laser eine Wellenlänge im Bereich von 0,5 bis 11 µm, bevorzugt im Bereich von 1,06 bis 10,6 µm, aufweist.

Wie vorstehend erläutert, ist das erfindungsgemäße Verfahren prinzipiell für eine Vielzahl von unvulkanisierten Kautschukprodukten einsetzbar. Als besonders vorteilhaft erweist sich jedoch der Einsatz zur Kennzeichnung unvulkanisierten Laufstreifen, die später in der Fertigung von Fahrzeugreifen eingesetzt werden sollen. Dieses Verfahren ist insbesondere deshalb vorteilhaft, weil bei den regelmäßig extrudierten, unvulkanisierten Laufstreifen ein besonders hohes Bedürfnis danach besteht, die Prozessparameter besonders akkurat zu dokumentieren. Bevorzugt ist demnach ein erfindungsgemäßes Verfahren, wobei das unvulkanisierte Kautschukprodukt ein unvulkanisierter Laufstreifen für Fahrzeugreifen, insbesondere Fahrzeugluftreifen ist.

Grundsätzlich ist das erfindungsgemäße Verfahren für im Wesentlichen alle Kautschukprodukte geeignet, insbesondere sämtliche Kautschukprodukte, die bei der Fertigung von Fahrzeugreifen auftreten. Neben extrudierten Produkten wie Laufstreifen kann es beispielsweise auch für Karkasslagen und ähnliche kalandrierte Produkte eingesetzt werden. Entsprechende Karkasslagen umfassen neben der Kautschukmischung auch sogenannte Verstärkungskorde, sodass es sich um Verbundmaterialien handelt. Bevorzugt ist jedoch ein erfindungsgemäßes Verfahren, wobei das unvulkanisierte Kautschukprodukt aus der vernetzbaren Kautschukmischung besteht.

Auch wenn die Erfinder der vorliegenden Erfindung keinen Grund zu der Annahme haben, dass das von ihnen entwickelte Verfahren nicht im Wesentlichen auf allen vernetzbaren Kautschukmischungen anwendbar ist, konnten sie durch eigene Experimente bevorzugte Zusammensetzungen für vernetzbare Kautschukmischungen identifizieren, mit denen sich das erfindungsgemäße Verfahren und die vorzunehmende Kennzeichnung zuverlässig ausführen lassen und mit denen darüber hinaus unvulkanisierte Kautschukprodukte erhalten werden können, bei denen die chemischen Eigenschaften, insbesondere die Fließeigenschaften der vernetzbaren Kautschukmischung, derart ausgeprägt sind, dass die aufgebrachte Kennzeichnung im Schritte der späteren Vulkanisierung vollständig bzw. nahezu vollständig verschwindet. Bevorzugt ist insoweit ein erfindungsgemäßes Verfahren, wobei die vernetzbare Kautschukmischung wenigstens einen Dienkautschuk umfasst, wobei der Deinkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Deinkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Bevorzugt ist zudem ein erfindungsgemäßes Verfahren, wobei die vernetzbare Kautschukmischung 2,5 bis 8,0 phr Schwefel umfasst, und/oder, wobei die vernetzbare Kautschukmischung 0,1 bis 100 phr eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß, Aluminiumhydroxid, Titandioxid, Magnesiumoxid, pyrogener Kieselsäure und Schichtsilikaten, besonders bevorzugt ausgewählt sind aus der Gruppe bestehend aus Ruß und pyrogener Kieselsäure.

Die Angabe phr entspricht dabei der in der Kautschukindustrie üblichen Angabe als parts per hundred rubber, bei der die Massenangaben jeweils auf hundert Massenteile der in der Mischung enthaltenen Kautschuke bezogen ist.

Auch wenn die Herstellung des unvulkanisierten Kautschukprodukts, wie vorstehend erläutert, beispielsweise auch im Zuge eines Kalandrierens oder ähnlicher Methoden erfolgen kann, ist es mit Blick auf eine effiziente Verfahrensführung explizit bevorzugt, wenn die Herstellung über eine Extrusion erfolgt, insbesondere, weil hierdurch eine kontinuierliche Verfahrensführung besonders effizient realisiert werden kann. Bevorzugt ist entsprechend ein erfindungsgemäßes Verfahren, wobei die Herstellung in Schritt a) die Extrusion einer vernetzbaren Kautschukmischung aus einem Extruder umfasst.

Nach Erkenntnis der Erfinder ist es prinzipiell möglich, die erfindungsgemäß aufzubringende Kennzeichnung räumlich und/oder zeitlich getrennt von der Herstellung des unvulkanisierten Kautschukprodukts vorzunehmen. Nach Erkenntnis der Erfinder erfordert dies jedoch zumeist eine sehr präzise und aufwendige Nachverfolgung der unvulkanisierten Kautschukprodukte, um diese später zuverlässig und präzise den bei der Herstellung jeweils herrschenden Prozessparametern zuzuordnen. Nach Einschätzung der Erfinder ist es besonders vorteilhaft, wenn im Gegensatz hierzu die Kennzeichnung unmittelbar nach der Herstellung des unvulkanisierten Kautschukprodukts erfolgt. Hierdurch wird es signifikant vereinfacht, die relevanten Prozessparameter fehlerfrei in Verbindung mit dem unvulkanisierten Kautschukprodukt zu dokumentieren und mittels der Kennzeichnung auf dem unvulkanisierten Kautschukprodukt zu vermerken. Darüber hinaus haben die Erfinder der vorliegenden Erfindung erkannt, dass die Verarbeitbarkeit des unvulkanisierten Kautschukprodukts mit den zur Kennzeichnung einzusetzenden Bearbeitungsverfahren unmittelbar nach der Herstellung in vielen Fällen deutlich verbessert ist, beispielsweise wenn eindrückende Verfahren verwendet werden, die besonders von einer niedrigeren Viskosität der vernetzbaren Kautschukmischung profitieren. Bevorzugt ist folglich ein erfindungsgemäßes Verfahren, wobei das Aufbringen der Kennzeichnung räumlich und zeitlich unmittelbar nach der Herstellung des unvulkanisierten Kautschukprodukts erfolgt.

Insoweit wird es als ganz besonders vorteilhaft angesehen, das unvulkanisierte Kautschukprodukt noch im warmen Zustand zu kennzeichnen. Bevorzugt ist daher ein erfindungsgemäßes Verfahren, wobei die Temperatur des unvulkanisierten Kautschukprodukts beim Aufbringen der Kennzeichnung 60 °C oder mehr, bevorzugt 70 °C oder mehr, besonders bevorzugt 80 °C oder mehr, beträgt, wobei die Temperatur des unvulkanisierten Kautschukprodukts beim Aufbringen der Kennzeichnung ganz besonders bevorzugt im Bereich von 70 bis 140 °C liegt.

Mit Blick auf den erreichbaren Durchsatz und entsprechend die Kosteneffizienz des Verfahrens hat es sich als besonders vorteilhaft erwiesen, dass das erfindungsgemäße Verfahren als kontinuierliches Verfahren betrieben werden kann, wenn es in einer Extrusionslinie zum Einsatz kommt. Die vorstehend als bevorzugt beschriebene Ausführungsform lässt sich insbesondere dann besonders effizient realisieren, wenn die erfindungsgemäß vorzunehmende Kennzeichnung in der Extrusionslinie räumlich nicht zu weit vom Extruderkopf entfernt stattfindet. Bevorzugt ist ein erfindungsgemäßes Verfahren, wobei das Verfahren in einer kontinuierlich betriebenen Extrusionslinie durchgeführt wird, wobei das Aufbringen der Kennzeichnung bevorzugt in einem Bereich der Extrusionslinie erfolgt, der 3 bis 20 m, bevorzugt 4 bis 10 m, besonders bevorzugt 5 bis 8 m, vom Extruderkopf beabstandet ist.

Die in dem erfindungsgemäßen Verfahren aufgebrachte Kennzeichnung ist naturgemäß das Resultat einer sehr feinen Bearbeitung, die viel Sorgfalt und Genauigkeit erfordert. Insbesondere bei der Wahl von besonders kleinen Tiefen der Vertiefungen kann nicht ausgeschlossen werden, dass die Kennzeichnung in unzureichender Weise appliziert wird und die notwendige Auslesbarkeit der aufgebrachten Kennzeichnung nicht gewährleistet ist. Um diesem Problem zu begegnen, schlagen die Erfinder der vorliegenden Erfindung vor, in dem erfindungsgemäßen Verfahren einen weiteren Schritt vorzusehen, bei der die Auslesbarkeit der aufgebrachten Kennzeichnung bevorzugt unmittelbar nach der Kennzeichnung und/oder am Ende der Extrusionslinie durch eine Prüfvorrichtung überprüft wird. Wenn diese Prüfung ergibt, dass die Auslesbarkeit nicht den Erfordernissen entspricht, kann beispielsweise unmittelbar eine weitere Kennzeichnung aufgebracht werden, die die notwendigen Anforderungen erfüllt. Bevorzugt ist ein erfindungsgemäßes Verfahren, zusätzlich umfassend den Schritt:
c) Überprüfen der Auslesbarkeit der aufgebrachten Kennzeichnung durch eine Prüfvorrichtung.

Als sinnvolle Weiterentwicklung des erfindungsgemäßen Verfahrens schlagen die Erfinder der vorliegenden Erfindung vor, dass die aufgebrachte Kennzeichnung durch eine Auslesevorrichtung, bei der es sich in der bevorzugten Ausgestaltung auch um die zur Prüfung verwendete Prüfvorrichtung handeln kann, ausgelesen werden kann, um an die Informationen über den zumindest einen Prozessparameter zu gelangen. Dies kann beispielsweise dann erfolgen, wenn ein unvulkanisiertes Kautschukprodukt nach einer vorhergehenden Lagerung der Weiterverarbeitung mit anderen Kautschukprodukten zugeführt wird. In dem bevorzugten erfindungsgemäßen Verfahren wird die ausgelesene Information entsprechend mit anderen Informationen, die zu den weiteren Kautschukhalbzeugen passen, korreliert und dadurch ein Datensatz erstellt, der Informationen zu dem durch Verarbeitung erhaltenen Produkt umfasst. Ein solcher Datensatz kann anschließend gespeichert werden und steht nach Fertigung des Endproduktes zur Verfügung. In besonders bevorzugten Ausgestaltungen kann nunmehr auch eine Endkennzeichnung auf der Oberfläche des Gesamtkautschukprodukts angebracht werden, die die im Datensatz gespeicherten Informationen enthält oder mit diesen, analog zu dem vorstehend beschriebenen Vorgehen, über ein System zur Datenverarbeitung korreliert werden kann. Bevorzugt ist somit ein erfindungsgemäßes Verfahren, zusätzlich umfassend die Schritte:
d) Auslesen der aufgebrachten Kennzeichnung durch eine Auslesevorrichtung zum Erhalt der Informationen über den einen oder die mehreren Prozessparameter,
e) Korrelieren der Informationen über den einen oder die mehreren Prozessparameter des unvulkanisierten Kautschukprodukts mit Informationen betreffend ein oder mehrere weitere Kautschukhalbzeuge, die mit dem unvulkanisierten Kautschukprodukt zusammen zu einem Gesamtkautschukprodukt verarbeitet werden sollen, zum Erhalt eines Datensatzes, und
f) Speichern des Datensatzes in einer Speichereinheit eines Systems zur Datenverarbeitung, sowie optional
g) Aufbringen einer Endkennzeichnung auf eine Oberfläche des Gesamtkautschukprodukts, wobei die Endkennzeichnung Informationen über den Datensatz umfasst und/oder über ein System zur Datenverarbeitung mit Informationen über den Datensatz verknüpft ist.

Die Erfinder der vorliegenden Erfindung schlagen vor, dass die Prüfvorrichtung und/oder die Auslesevorrichtung jeweils über einen optischen Sensor verfügen sollen, mit denen sie die Kennzeichnung auslesen können. Wie vorstehend erläutert, ist es dabei bevorzugt, wenn die Prüfvorrichtung und die Auslesevorrichtung durch die gleiche Vorrichtung gebildet werden. Bevorzugt ist somit ein erfindungsgemäßes Verfahren, wobei die Prüfvorrichtung über einen optischen Sensor verfügt, der mit einer Vorrichtung zur Datenverarbeitung verbunden ist. Bevorzugt ist ebenso ein erfindungsgemäßes Verfahren, wobei die Auslesevorrichtung über einen optischen Sensor verfügt, der mit einer Vorrichtung zur Datenverarbeitung verbunden ist. Bevorzugt ist auch ein erfindungsgemäßes Verfahren, wobei die Prüfvorrichtung und die Auslesevorrichtung separate Vorrichtungen sind oder durch die gleiche Vorrichtung gebildet werden.

Im Lichte der vorstehenden Ausführungen ist es für den Fachmann ersichtlich, dass in dem bevorzugten erfindungsgemäßen Verfahren die Kautschukhalbzeuge bevorzugt Komponenten eines Fahrzeugreifens sind, die entsprechend zu einem Fahrzeugreifen zusammengesetzt werden.

Bevorzugt ist ein bevorzugtes erfindungsgemäßes Verfahren, wobei das eine oder die mehreren Kautschukhalbzeuge Komponenten eines Fahrzeugreifens, insbesondere eines Fahrzeugluftreifens sind, und wobei das Gesamtkautschukprodukt ein Fahrzeugreifen, insbesondere ein Fahrzeugluftreifen, ist.

Ausgehend von dem erfindungsgemäßen Verfahren kann das entsprechend verarbeitete unvulkanisierte Kautschukprodukt anschließend durch Vulkanisation in ein entsprechendes Kautschukprodukt überführt werden. Für die Vulkanisation kommen hierbei die in dem Bereich der Technik üblichen Verfahren zum Einsatz. Nach Erkenntnis der Erfinder ist es jedoch besonders vorteilhaft, für die Vulkanisation bestimmte Temperaturen vorzusehen, die insbesondere nicht zu niedrig angesetzt werden sollten, um zu befördern, dass die auf den unvulkanisierten Kautschukprodukten angebrachte Kennzeichnung bei einem ausreichend fließfähigen Material besonders vollständig verblassen kann, sodass sie nicht oder im Wesentlichen nicht mehr mit bloßem Auge wahrzunehmen ist. Bevorzugt ist folglich ein erfindungsgemäßes Verfahren, zusätzlich umfassend den Schritt:
h) Vulkanisieren des unvulkanisierten Kautschukprodukts zum Erhalt eines vulkanisierten Kautschukprodukts.

Bevorzugt ist dabei ein erfindungsgemäßes Verfahren, wobei das Vulkanisieren des unvulkanisierten Kautschukprodukts bei einer Temperatur im Bereich von 110 bis 170 °C, bevorzugt im Bereich von 120 bis 160 °C, erfolgt.

Nach umfassenden eigenen Versuchen schlagen die Erfinder der vorliegenden Erfindung vor, die Kennzeichnung so auf das später zum Vulkanisieren verwendete Verfahren abzustimmen, dass die erzeugte Kennzeichnung im Wesentlichen vollständig verblasst und entsprechend nahezu nicht mehr wahrnehmbar ist. Bevorzugt ist insoweit ein erfindungsgemäßes Verfahren, wobei die Kennzeichnung nach dem Vulkanisieren des unvulkanisierten Kautschukprodukts gegenüber der in Schritt b) erzeugten Kennzeichnung ein um 75 % oder mehr, bevorzugt 85 % oder mehr, besonders bevorzugt 95 % oder mehr, ganz besonders bevorzugt 98 % oder mehr, verringertes Gesamtvolumen aufweist, bezogen auf das Gesamtvolumen der in Schritt b) erzeugten Vertiefungen. Bevorzugt ist insoweit auch ein erfindungsgemäßes Verfahren, wobei die Vertiefungen der Kennzeichnung nach dem Vulkanisieren des unvulkanisierten Kautschukprodukts gegenüber der in Schritt b) erzeugten Kennzeichnung eine um 75 % oder mehr, bevorzugt 85 % oder mehr, besonders bevorzugt 95 % oder mehr, ganz besonders bevorzugt 98 % oder mehr, verringerte Tiefe aufweisen.

Für den Fachmann ist ersichtlich, dass auch das unvulkanisierte Kautschukprodukt, welches mit dem erfindungsgemäßen Verfahren erhalten werden kann, in sich besonders vorteilhaft ist. Durch die spezifische Ausgestaltung kann es durch Vulkanisation in ein vulkanisiertes Kautschukprodukt überführt werden, in dem eine zuvor vorhandene Kennzeichnung, in der wichtige Prozessinformationen (oder eine Verbindungsinformation zu diesen Informationen) gespeichert werden konnten, nicht mehr bzw. im Wesentlichen nicht mehr sichtbar ist, sodass die darauf herstellbaren Endprodukte quasi keine visuellen Fehlstellen aufweisen. Die Erfindung betrifft somit auch ein unvulkanisiertes Kautschukprodukt, umfassend eine vernetzbare Kautschukmischung, wobei das unvulkanisierte Kautschukprodukt auf einer Oberfläche eine Kennzeichnung aus Vertiefungen mit einer Tiefe von 100 µm oder weniger verfügt, wobei die Kennzeichnung Informationen über einen oder mehrere Prozessparameter der Herstellung des unvulkanisierten Kautschukprodukts umfasst und/oder über ein System zur Datenverarbeitung mit Informationen über einen oder mehrere Prozessparameter der Herstellung des unvulkanisierten Kautschukprodukts verknüpft ist.

Die Offenbarung betrifft zudem ein vulkanisiertes Kautschukprodukt, insbesondere Fahrzeugreifen, herstellbar durch Vulkanisation eines erfindungsgemäßen unvulkanisierten Kautschukprodukts und/oder herstellbar mit einem erfindungsgemäßen Verfahren.

Wie vorstehend erläutert, kommen grundsätzlich zahlreiche verschiedene Vorrichtungen zum Herstellen des unvulkanisierten Kautschukprodukts in Frage. Nach Einschätzung der Erfinder ist jedoch, insbesondere mit Blick auf die effiziente Verfahrensführung, der Einsatz einer Extrusionslinie explizit bevorzugt. Die Erfinder der vorliegenden Erfindung schlagen vor, dieses so auszurüsten, dass mit ihr das erfindungsgemäße Verfahren durchgeführt werden kann und sich die vorstehend beschriebenen Vorteile ergeben. Die Erfindung darüber hinaus somit auch eine Vorrichtung zum Herstellen eines unvulkanisierten Kautschukprodukts, bevorzugt Extrusionslinie zum Herstellen eines unvulkanisierten Kautschukprodukts, insbesondere zur Durchführung des erfindungsgemäßen Verfahrens, umfassend ein oder mehrere Werkzeuge, die dazu eingerichtet sind, mit einem materialabtragenden Verfahren und/oder einem eindrückenden Verfahren eine Kennzeichnung aus Vertiefungen auf der Oberfläche eines unvulkanisierten Kautschukprodukts zu erzeugen, sodass die erzeugten Vertiefungen eine Tiefe von 100 µm oder weniger aufweisen.

Bevorzugt ist dabei eine erfindungsgemäße Vorrichtung, wobei die Vorrichtung eine Extrusionslinie ist und wobei das eine oder die mehreren Werkzeuge in einem Bereich der Extrusionslinie angeordnet sind, der 3 bis 8 m, bevorzugt 4 bis 7 m, vom Extruderkopf beabstandet ist.

Bevorzugt ist zudem eine erfindungsgemäße Vorrichtung, wobei das eine oder die mehreren Werkzeuge Laser sind, bevorzugt CO₂-Laser oder Faserlaser.

Nachfolgend werden bevorzugte Ausführungsformen der Erfindung unter Bezugnahme auf die beiliegende Zeichnung näher erläutert und beschrieben. Dabei zeigt:

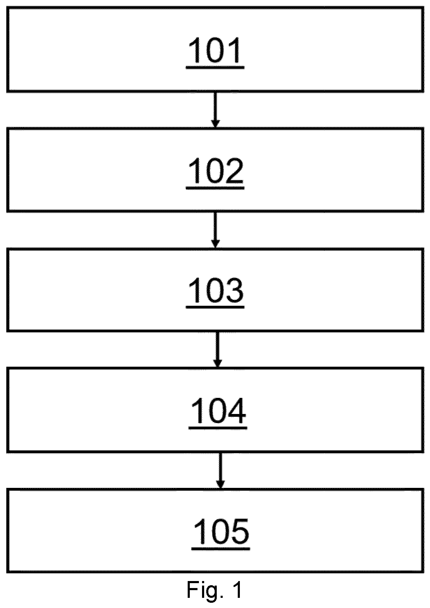

- Fig. 1: ein schematisches Flussdiagramm des erfindungsgemäßen Verfahrens in einer bevorzugten Ausführungsform.

Fig. 1 zeigt ein schematisches Flussdiagramm eines beispielhaften erfindungsgemäßen Verfahrens, welches nach Einschätzung der Erfinder besonders vorteilhaft ist. Mit diesen und vergleichbaren Verfahren konnten von den Erfindern verschiedene unvulkanisierte Kautschukprodukte, insbesondere Laufstreifen von Fahrzeugluftreifen, gekennzeichnet werden, wobei diese Kautschukprodukte nach der Vulkanisation auf ihrer Oberfläche im Wesentlichen keine mit dem bloßen Auge sichtbaren Spuren der zuvor erfolgten Kennzeichnung mehr aufwiesen. Diese Bewertung erfolgte dabei qualitativ durch Inaugenscheinnahme der hergestellten vulkanisierten Kautschukprodukte durch mit der Reifenherstellung vertraute Arbeiter aus einem Abstand von etwa einem Meter. Hierbei wurden die verbleibenden Spuren der zuvor erfolgten Kennzeichnung jeweils bestenfalls erst dann registriert, wenn die bewertenden Personen aktiv auf die Stelle der zuvor erfolgten Kennzeichnung hingewiesen wurden.

In dem in Fig. 1 dargestellten beispielhaften Verfahren erfolgt in Schritt 101 die Herstellung eines unvulkanisierten Laufstreifens, welcher vollständig aus einer vernetzbaren Kautschukmischung besteht, die neben Schwefel und Füllstoff vor allem aus SSBR besteht. Der entsprechende unvulkanisierte Laufstreifen wird dabei auf einer kontinuierlich arbeitenden Extrusionslinie aus einem Extruderkopf extrudiert. In Schritt 102 erfolgt das Aufbringen einer Kennzeichnung auf die Oberfläche des unvulkanisierten Laufstreifens. Das Aufbringen erfolgte mit einem CO₂-Laser bzw. einem Faserlaser mit einer Wellenlänge im infraroten Bereich, welcher etwa 5 m hinter dem Ausgang des Extruderkopfes angeordnet wird.

Das Aufbringen der Kennzeichnung erfolgte durch das lasergestützte Erzeugen von Vertiefungen auf der Oberfläche, wobei sämtliche Vertiefungen eine Tiefe von 10 - 50 µm aufwiesen. Auf diese Weise wird eine maschinenlesbare Kennzeichnung in Form eines DataMatrix-Code aufgebracht, der eine Verbindungsinformation enthält, die eine entsprechende Auslesevorrichtung zu einem bestimmten Teil einer Speichereinheit führt, in der in der praktischen Anwendung die entsprechenden Prozessparameter, die für das jeweilige Verfahren von Interesse sind, gespeichert werden.

Die Kennzeichnung erfolgt auf der Seite des Laufstreifens, die später im Zuge des Vulkanisierens und der Reifenherstellung mit dem Profil versehen werden soll, also im späteren Einsatz sichtbar ist. Im Moment der Kennzeichnung liegt die Temperatur des unvulkanisierten Kautschukprodukts etwa im Bereich zwischen 70 und 80° C, was sich insbesondere beim Einsatz des Lasers als geeigneter Temperaturbereich erwiesen hat.

In Schritt **103** erfolgt anschließend, d.h. am Ende der Extrusionslinie, eine Überprüfung der aufgebrachten Kennzeichnung auf Auslesbarkeit, die jedoch für viele spätere praxisrelevante Verfahren wohl als optional angesehen werden kann. Für die gewählten Tiefenbereiche wurde dabei in sämtlichen Experimenten ein ausreichend guter Kontrast und eine hinreichende Auslesbarkeit festgestellt.

Nach Verlassen der Extrusionslinie wird der Laufstreifen mit weiteren Kautschukhalbzeugen, d.h. weiteren Reifenkomponenten, zu einem Reifenrohling zusammengesetzt. Hierbei wird die aufgebrachte Kennzeichnung in Schritt **104** durch eine Auslesevorrichtung mit einem optischen Sensor, bei dem sich um eine Kamera mit einer Bilderkennungssoftware handelte, ausgelesen und dadurch eine Verbindungsinformation zu ihrem spezifischen Speicherort auf der Speichereinheit abgerufen. In der späteren praktischen Anwendung würden diese Daten mit vergleichbaren Daten zu den weiteren Kautschukhalbzeugen kombiniert und in einem Gesamtdatensatz gespeichert, der mit dem herzustellenden Gesamtkautschukprodukt korreliert wird, beispielsweise mittels eines auf dem Fahrzuegreifen angebrachten Barcodes.

Im Rahmen der von den Erfindern durchgeführten Versuche erfolgt anschließend in Schritt **105** die Vulkanisation des unvulkanisierten Kautschukprodukts, wobei diese zusammen mit den anderen Komponenten des Fahrzeugluftreifens im Reifenrohling erfolgt und dabei in üblicher Weise ein Profil auf die Außenseite des Laufstreifens aufgeprägt wird. Die Vulkanisation erfolgte dabei bei einer Temperatur von etwa 160 °C. Dieses Vorgehen erwies sich in den Versuchen der Erfinder als ausreichend, um eine im Wesentlichen vollständige Verringerung der Tiefe der zuvor zur Kennzeichnung hergestellten Vertiefungen zu erreichen, die angesichts der nahezu nicht mehr auszumessenden Überreste der Vertiefungen mit etwa 99 % abgeschätzt werden kann.

## Patentansprüche

1. Verfahren zur Nachverfolgung von Prozessparametern bei der Herstellung von Kautschukprodukten, insbesondere von unvulkanisierten Laufstreifen für Fahrzeugluftreifen, umfassend die Schritte:
a) Herstellen eines unvulkanisierten Kautschukprodukts, umfassend eine vernetzbare Kautschukmischung, und
b) Aufbringen einer Kennzeichnung auf eine Oberfläche des unvulkanisierten Kautschukprodukts, wobei die Kennzeichnung Informationen über einen oder mehrere Prozessparameter der Herstellung umfasst und/oder über ein System zur Datenverarbeitung mit Informationen über einen oder mehrere Prozessparameter der Herstellung verknüpft ist,
wobei das Aufbringen der Kennzeichnung durch das Erzeugen von Vertiefungen auf der Oberfläche mit einem materialabtragenden Verfahren und/oder einem eindrückenden Verfahren erfolgt, wobei die erzeugten Vertiefungen eine Tiefe von 100 µm oder weniger aufweisen.

2. Verfahren nach Anspruch 1, wobei die erzeugten Vertiefungen, bevorzugt sämtliche der erzeugten Vertiefungen, eine Tiefe von 70 µm oder weniger, bevorzugt 50 µm oder weniger, besonders bevorzugt 30 oder weniger, aufweisen.

3. Verfahren nach einem der Ansprüche 1 oder 2, wobei die Kennzeichnung einen QR-Code, einen Bar-Code oder einen DataMatrix-Code, bevorzugt einen DataMatrix-Code, umfasst.

4. Verfahren nach einem der Ansprüche 1 bis 3, wobei das Aufbringen der Kennzeichnung durch das Erzeugen von Vertiefungen auf der Oberfläche mit einem Laser erfolgt, wobei der Laser vorzugsweise ein CO₂-Laser oder ein Faserlaser ist.

5. Verfahren nach einem der Ansprüche 1 bis 4, wobei die Temperatur des unvulkanisierten Kautschukprodukts beim Aufbringen der Kennzeichnung 60 °C oder mehr, bevorzugt 70 °C oder mehr, besonders bevorzugt 80 °C oder mehr, beträgt, wobei die Temperatur des unvulkanisierten Kautschukprodukts beim Aufbringen der Kennzeichnung ganz besonders bevorzugt im Bereich von 70 bis 140 °C liegt.

6. Verfahren nach einem der Ansprüche 1 bis 5, zusätzlich umfassend den Schritt:
c) Überprüfen der Auslesbarkeit der aufgebrachten Kennzeichnung durch eine Prüfvorrichtung.

7. Verfahren nach einem der Ansprüche 1 bis 6, zusätzlich umfassend die Schritte:
d) Auslesen der aufgebrachten Kennzeichnung durch eine Auslesevorrichtung zum Erhalt der Informationen über den einen oder die mehreren Prozessparameter,
e) Korrelieren der Informationen über den einen oder die mehreren Prozessparameter des unvulkanisierten Kautschukprodukts mit Informationen betreffend ein oder mehrere weitere Kautschukhalbzeuge, die mit dem unvulkanisierten Kautschukprodukt zusammen zu einem Gesamtkautschukprodukt verarbeitet werden sollen, zum Erhalt eines Datensatzes, und
f) Speichern des Datensatzes in einer Speichereinheit eines Systems zur Datenverarbeitung, sowie optional
g) Aufbringen einer Endkennzeichnung auf eine Oberfläche des Gesamtkautschukprodukts, wobei die Endkennzeichnung Informationen über den Datensatz umfasst und/oder über ein System zur Datenverarbeitung mit Informationen über den Datensatz verknüpft ist.

8. Verfahren nach einem der Ansprüche 1 bis 7, zusätzlich umfassend den Schritt:
h) Vulkanisieren des unvulkanisierten Kautschukprodukts zum Erhalt eines vulkanisierten Kautschukprodukts.

9. Verfahren nach einem der Ansprüche 1 bis 8, wobei die Vertiefungen der Kennzeichnung nach dem Vulkanisieren des unvulkanisierten Kautschukprodukts gegenüber der in Schritt b) erzeugten Kennzeichnung eine um 75 % oder mehr, bevorzugt 85 % oder mehr, besonders bevorzugt 95 % oder mehr, ganz besonders bevorzugt 98 % oder mehr, verringerte Tiefe aufweisen.

10. Vorrichtung zum Herstellen eines unvulkanisierten Kautschukprodukts, bevorzugt Extrusionslinie zum Herstellen eines unvulkanisierten Kautschukprodukts, insbesondere zur Durchführung des Verfahrens nach einem der Ansprüche 1 bis 9, umfassend ein oder mehrere Werkzeuge, die dazu eingerichtet sind, mit einem materialabtragenden Verfahren und/oder einem eindrückenden Verfahren eine Kennzeichnung aus Vertiefungen auf der Oberfläche eines unvulkanisierten Kautschukprodukts zu erzeugen, sodass die erzeugten Vertiefungen eine Tiefe von 100 µm oder weniger aufweisen.

## Claims

1. Method for tracking process parameters in the production of rubber products, in particular unvulcanized treads for vehicle pneumatic tyres, comprising the steps of:
a) producing an unvulcanized rubber product, comprising a crosslinkable rubber mixture, and
b) applying an identification to a surface of the unvulcanized rubber product, wherein the identification comprises information about one or more process parameters of production and/or is linked with information about one or more process parameters of production by way of a system for data processing, wherein applying the identification is carried out by producing depressions on the surface using a material-removing method and/or an impressing method, wherein the depressions produced have a depth of 100 µm or less.

2. Method according to Claim 1, wherein the depressions produced, preferably all of the depressions produced, have a depth of 70 µm or less, preferably 50 µm or less, particularly preferably 30 or less.

3. Method according to either of Claims 1 and 2, wherein the identification comprises a QR code, a barcode or a data matrix code, preferably a data matrix code.

4. Method according to any of Claims 1 to 3, wherein applying the identification is carried out by producing depressions on the surface using a laser, wherein the laser is preferably a CO₂ laser or a fibre laser.

5. Method according to any of Claims 1 to 4, wherein the temperature of the unvulcanized rubber product during the step of applying the identification is 60°C or more, preferably 70°C or more, particularly preferably 80°C or more, wherein the temperature of the unvulcanized rubber product during the step of applying the identification is very particularly preferably in the range of 70 to 140°C.

6. Method according to any of Claims 1 to 5, additionally comprising the step of:
c) checking the readability of the applied identification by means of a checking device.

7. Method according to any of Claims 1 to 6, additionally comprising the steps of:
d) reading the applied identification by means of a readout device in order to obtain the information about the one or more process parameters,
e) correlating the information about the one or more process parameters of the unvulcanized rubber product with information concerning one or more further semifinished rubber products which are intended to be processed together with the unvulcanized rubber product to form an overall rubber product, in order to obtain a data set, and
f) storing the data set in a storage unit of a system for data processing, and optionally
g) applying a final identification to a surface of the overall rubber product, wherein the final identification comprises information about the data set and/or is linked with information about the data set by way of a system for data processing.

8. Method according to any of Claims 1 to 7, additionally comprising the step of:
h) vulcanizing the unvulcanized rubber product in order to obtain a vulcanized rubber product.

9. Method according to any of Claims 1 to 8, wherein the depressions of the identification after the step of vulcanizing the unvulcanized rubber product have a depth reduced by 75% or more, preferably 85% or more, particularly preferably 95% or more, very particular preferably 98% or more, compared with the identification produced in step b).

10. Device for producing an unvulcanized rubber product, preferably extrusion line for producing an unvulcanized rubber product, in particular for carrying out the method according to any of Claims 1 to 9, comprising one or more tools configured to produce an identification made from depressions on the surface of an unvulcanized rubber product using a material-removing method and/or an impressing method, such that the depressions produced have a depth of 100 µm or less.

## Revendications

1. Procédé de suivi de paramètres de processus lors de la fabrication de produits en caoutchouc, en particulier de bandes de roulement non vulcanisées pour pneumatiques de véhicules, comprenant les étapes suivantes :
a) fabriquer un produit en caoutchouc non vulcanisé comprenant un mélange de caoutchouc réticulable, et
b) appliquer un marquage sur une surface du produit en caoutchouc non vulcanisé, le marquage comprenant des informations sur un ou plusieurs paramètres de processus de fabrication et/ou étant relié à un système de traitement de données contenant des informations sur un ou plusieurs paramètres de processus de fabrication,
l'application du marquage étant réalisée par la création de dépressions sur la surface au moyen d'un procédé d'enlèvement de matière et/ou d'un procédé d'empreinte, les dépressions créées ayant une profondeur de 100µm ou moins.

2. Procédé selon la revendication 1, dans lequel les dépressions créées, de préférence toutes les dépressions créées, ont une profondeur de 70µm ou moins, de préférence de 50µm ou moins, de façon particulièrement préférée, de 30µm ou moins.

3. Procédé selon l'une des revendications 1 ou 2, dans lequel le marquage comprend un code QR, un code-barres ou un code DataMatrix, de préférence un code DataMatrix.

4. Procédé selon l'une des revendications 1 à 3, dans lequel l'application du marquage s'effectue par la création de dépressions à la surface au moyen d'un laser, le laser étant de préférence un laser à CO₂ ou un laser à fibre.

5. Procédé selon l'une des revendications 1 à 4, dans lequel la température du produit en caoutchouc non vulcanisé lors de l'application du marquage est de 60°C ou plus, de préférence de 70°C ou plus, de manière particulièrement préférée, de 80°C ou plus, la température du produit en caoutchouc non vulcanisé lors de l'application du marquage étant, de manière particulièrement préférée, comprise dans une gamme allant de 70 à 140°C.

6. Procédé selon l'une des revendications 1 à 5, comprenant en outre l'étape suivante :
c) vérification, au moyen d'un appareil de contrôle, de la lisibilité du marquage appliqué.

7. Procédé selon l'une des revendications 1 à 6, comprenant en outre les étapes suivantes :
d) lecture, au moyen d'un dispositif de lecture, du marquage appliqué afin d'obtenir les informations sur le ou les paramètres de processus,
e) corrélation des informations sur le ou les paramètres de processus du produit en caoutchouc non vulcanisé avec des informations concernant un ou plusieurs autres produits semi-finis en caoutchouc qui doivent être fabriqués avec le produit en caoutchouc non vulcanisé pour former un produit en caoutchouc complet, afin d'obtenir un ensemble de données, et
f) enregistrement de l'ensemble de données dans une unité à mémoire d'un système de traitement de données, ainsi que, optionnellement,
g) application d'un marquage final sur une surface du produit en caoutchouc global, le marquage final comprenant des informations sur l'ensemble de données et/ou étant relié à un système de traitement de données contenant des informations sur l'ensemble de données.

8. Procédé selon l'une des revendications 1 à 7, comprenant en outre l'étape suivante :
h) vulcanisation du produit en caoutchouc non vulcanisé pour obtenir un produit en caoutchouc vulcanisé.

9. Procédé selon l'une des revendications 1 à 8, dans lequel les dépressions du marquage après vulcanisation du produit en caoutchouc non vulcanisé présentent une profondeur réduite de 75% ou plus, de préférence de 85% ou plus, de manière particulièrement préférée de 95% ou plus, de manière particulièrement préférée de 98% ou plus, par rapport au marquage produit à l'étape b).

10. Dispositif pour fabriquer un produit en caoutchouc non vulcanisé, de préférence une ligne d'extrusion pour fabriquer un produit en caoutchouc non vulcanisé, en particulier pour mettre en œuvre le procédé selon l'une des revendications 1 à 9, comprenant un ou plusieurs outils qui sont conçus pour produire, par un procédé d'enlèvement de matière et/ou un procédé d'impression, un marquage constitué de dépressions sur la surface d'un produit en caoutchouc non vulcanisé, de telle sorte que les dépressions produites présentent une profondeur de 100µm ou moins.
